# EUROPEAN PATENT APPLICATION

(11) **EP 2 368 420 A1**
(43) Date of publication of application: **28.09.2011**
(21) Application number: 11001854.6
(22) Date of filing: 07.03.2011
(51) Int. Cl.: A01G 3/00, A01G 23/08, A01D 43/14

(54) **Clearing device**

(30) Priority: 22.03.2010 FI 20105281
(71) Applicant: Usenius, Jussi-Pekka, 40950 Muurame (FI)
(72) Inventor: Usenius, Jussi-Pekka, 40950 Muurame (FI)
(74) Representative: Pitkänen, Hannu Alpo Antero

(57) **Abstract**

The object of the invention is a clearing device joined to an attachment for feeding a chemical agent to the blades of the cleaning device, including an arm (1), a blade part (2) joined to the arm having movable blades (3) and counter-blades (7) above the blades (3), a liquid tank for a liquid chemical agent and one or more channels (4,5) and nozzles (6) joined to them for conveying the liquid agent to the blades (3) of the clearing device and for spreading it on tree stumps during clearing. According to the invention in the attachment the nozzles are positioned in the counter-blades (7).

## Description

The invention relates to a clearing device attachment, which clearing device includes an arm, a blade part joined to the arm having movable blades and counter-blades above the blades, a liquid tank for a liquid chemical agent and one or more channels and nozzles joined to them for conveying the liquid agent to the blades of the clearing device and for spreading it on tree stumps during clearing.

The automatisation of forestry aims at improving its work efficiency and economic profitability. In seeding stands, a sprout forest i.e. rapid-growing broad-leaved trees, such as e.g. willows, usually grow faster than seedlings. The sprout forest must be removed from top of the seedlings before it slows down or substantially prevents the seedlings from growing. The principal work in the early cleaning of seeding stands is the mechanical clearing of the sprout forest with a cutting or sawing machine, most often a clearing saw or an equivalent clearing device. There are some machine models on the market for mechanical early cleaning in which the operating principle of the blade is either the cutting model known of trimmers or the rapidly rotating sawing blade model of the clearing saw type.

When the sprout forest is cleared, trees will grow again quickly out of the cut stumps, whereby it is possible that the sprout forest must be cleared for a second time after a few years before the seedlings grow tall enough. To prevent the sprout forest from growing, the sprout forest stumps can be treated after the clearing with a chemical agent prohibiting growth. This is a separate measure, which consumes time and incurs costs, which affect the cost-effectiveness of clearing the sprout forest.

A problem is also the growth of grass on top of the seedlings. The grass can grow in some areas so tall that it slows down seedling growth and can suffocate the seedlings.

A problem is fungi, such as the root polypore, possibly contaminating the stumps of a conifer sprout forest. The spreading of such fungi should be prevented.

There exist clearing device attachments the use of which makes it possible to feed a chemical agent to the blades of the clearing device and spread it on tree stumps during clearing. Such known attachments have been connected to the blades of rapidly rotating clearing saws or power saws. A problem of such devices is precision in the dosing of the chemical used. Furthermore, there is a risk that, in the rapidly rotating cutting blades, the liquid agent diffuses into small drops or even smaller liquid mist, which can scatter away from the stump.

This invention relates to an attachment joined to a clearing device, which eliminates the above disadvantages. A particular object of the invention is to introduce a clearing device attachment, when using which, the treatment of sprout forest is done at one time, the treatment is precise and there is no need to treat the sprout forest again. An additional object of the invention is to introduce a clearing device attachment the use of which enables decreasing the growth of grass and the spread of fungi in the sprout forest.

In the clearing device attachment according to the invention, nozzles are positioned in counter-blades. In such a clearing device, a tree is cut when it is between the shear or cutting blade and the counter-blade or counter-blades. Such a structure is simple and working, the dosing of the liquid agent is precise, and it cannot become mist or scatter uncontrollably to the environment.

When using the clearing device attachment according to the invention, it is possible to treat the stumps of a sprout forest together with the clearing of the sprout forest with a chemical agent preventing the growth of a new sprout forest, e.g. a growth hormone. Hence, no separate working phase is required for spreading the chemical agent. The treatment can also aim at decreasing the growth of grass or at limiting the spreading of root polypore contaminating the stumps of a conifer sprout forest, and then agents suitable for these targets are used and the agents can be directed precisely at the target. It is also possible to use an agent, which is a mixture of various agents. The treatment preventing the growth of the sprout forest can lengthen the effect of the clearing giving growing space for seedlings by 1-2 growth seasons, whereby only one clearing time is enough for early cleaning. This has a substantial effect on the cost-effectiveness of clearing the sprout forest.

In an advantageous further embodiment of the invention, to the counter-blades at the points of the nozzles are formed slots for conveying the liquid agent to the blades. Then, the liquid agent can be effectively conveyed to the blades and from the blades to the sheared or cut surfaces.

In a yet further advantageous embodiment of the invention, the attachment includes an adjusting element for adjusting the feed of the liquid agent. Then, the feed of the liquid agent can be adjusted in a desired and appropriate way, e.g. to nozzles being on a specific side of the blade part or to nozzles on different sides at different times.

The invention will now be described in more detail with reference to the accompanying drawings in which
Fig. 1 shows an oblique top view of an embodiment of a blade part of a clearing device according to the invention,
Fig. 2 shows a direct top view of the blade part according to Fig. 1 and
Fig. 3 shows a bottom view of the blade part according to Fig. 1.

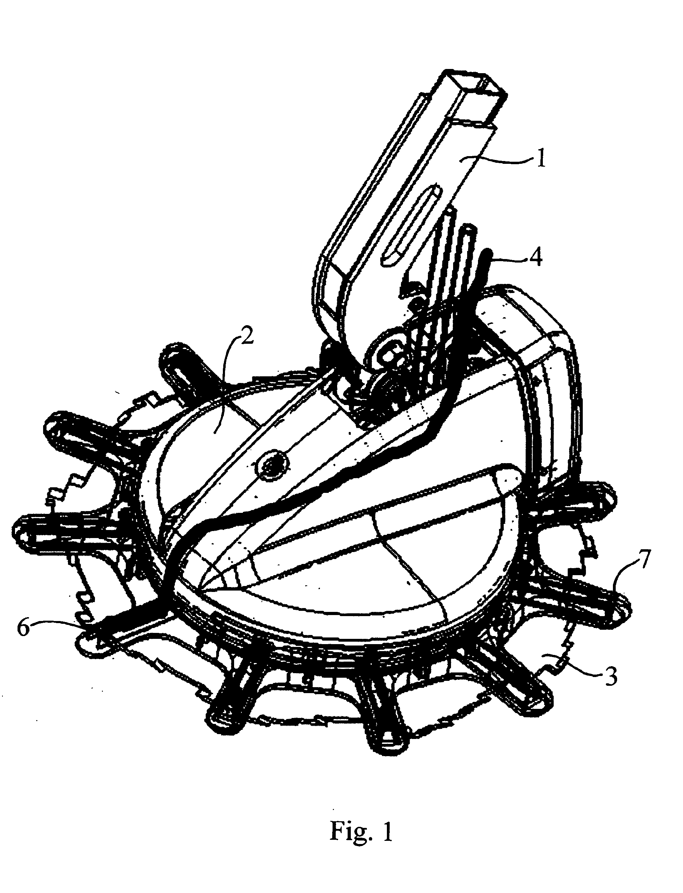

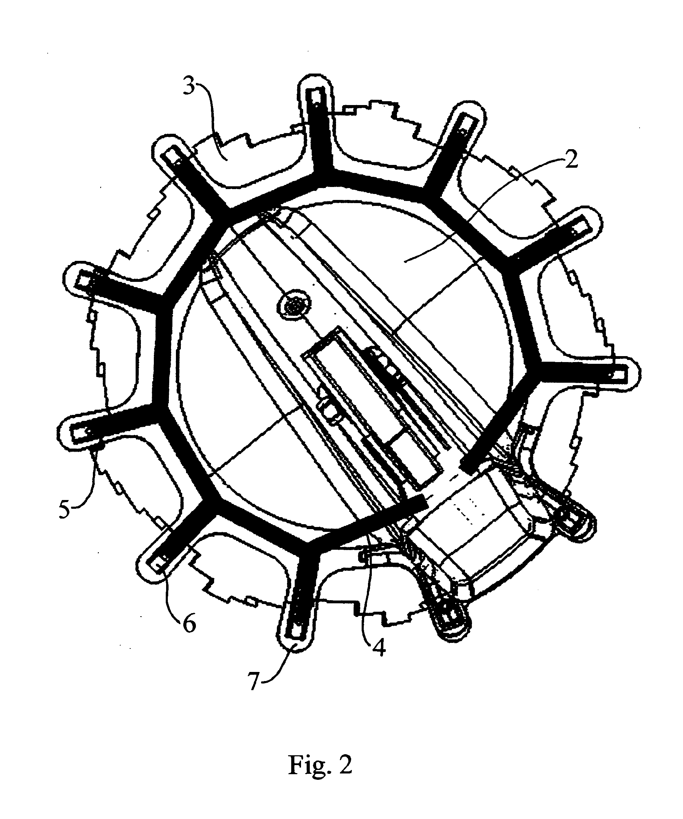

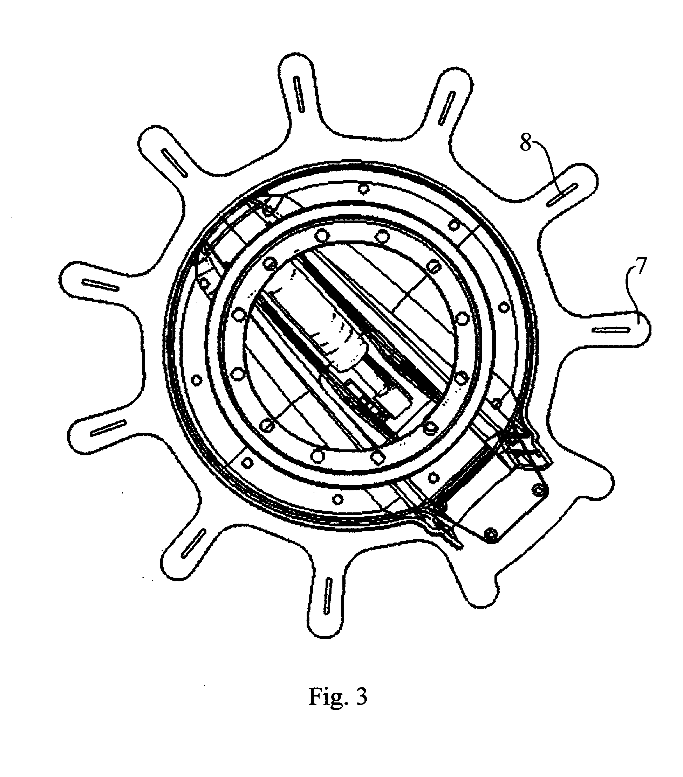

The figures show an embodiment of a lower part of an arm 1 included in a clearing device and a blade part 2 joined to the arm having a movable cutting blade and blades 3 in it. This clearing device includes fixed finger-like counter-blades 7 being above the rotating cutting blade. The figures do not show a liquid tank for a liquid chemical agent included in the clearing device attachment, but they show a channel 4 coming from the liquid tank and channels 5 related to it for conveying the liquid agent into connection with the blades 3 of the clearing device. The channel 4 circulates around the blade part and the channels 5 are led to the counter-blades. At the ends of the channels 5, there are nozzles 6 which are in this embodiment positioned on top of the counter-blades 7 in accordance with Figs. 1 and 2. By means of the nozzles, the flow of liquid can be adjusted in a desired way. Fig. 3 shows slots 8 in the counter-blades for conveying the liquid agent to the blades and/or for feeding it below the blades. This figure does not show the cutting blade and its blades in order to show the structure of the counter-blades clearer. Furthermore, the attachment includes a pressure pump (not shown in the figures) operating as an adjustment element for adjusting the feed of the liquid agent.

When using the clearing device, it is moved in a conventional way and trees are cut. When using the attachment, the pressure pump in the clearing device pumps a liquid chemical agent pressurised along the channels to the fixed nozzles from which toxin spreads as a pressurised spray on top of cut sprout stumps and possibly also to the stump environment.

By means of the pressure pump, the pressure and volume of liquid is adjusted in accordance with the concentration and viscosity of the liquid/solution such that an adequate agent content is provided on stumps created in clearing. Furthermore, the channels can include one or more adjusting elements for adjusting the flow of liquid. When moving the cutting device with a boom, the spraying can be adjusted to occur only from the counter-blades of the clearing device being in front in the travel direction, whereby the quantity of liquid/solution required is smaller. When moving the clearing device in a crane boom e.g. from right to left, liquid is only sprayed e.g. from five nozzles at the point of the left counter-blade and, when moving from left to right, only from the nozzles on the right. The spraying of the liquid can also be synchronised with the rotation speed of the blades such that the spraying occurs immediately after the blades have cut tree sprouts, whereby optimising the falling of the agent exactly on the stumps of cut sprouts. Then, some agent is saved and the quantity of the agent directed on the ground without a specific effect decreases.

The invention is not limited to the described advantageous embodiment, but it can vary within the scope of the inventive idea presented in the claims.

## Claims

1. A clearing device attachment, which clearing device includes an arm (1), a blade part (2) joined to the arm having movable blades (3) and counter-blades (7) above the blades (3), a liquid tank for a liquid chemical agent and one or more channels (4, 5) and nozzles (6) joined to them for conveying the liquid agent to the blades (3) of the clearing device and for spreading it on tree stumps during clearing, ***characterised* in that** the nozzles are positioned in the counter-blades (7).

2. A clearing device attachment according to claim 1, ***characterised* in that** to the counter-blades at the points of the nozzles have been formed slots (8) for conveying the liquid agent to the blades.

3. A clearing device attachment according to claim 1 or 2, ***characterised* in that** the attachment includes one or more adjusting elements for adjusting the feed of the liquid agent.
